# EUROPÄISCHE PATENTANMELDUNG

(11) **EP 3 816 833 A1**
(43) Veröffentlichungstag der Anmeldung: **05.05.2021**
(21) Anmeldenummer: 19205656.2
(22) Anmeldetag: 28.10.2019
(51) Int. Cl.: G06F 21/62, G06F 21/64, H04L 9/32

(54) **VERFAHREN UND DATENVERARBEITUNGSSYSTEM ZUM SICHERN VON DATEN GEGEN UNAUTORISIERTEN ZUGRIFF**

(71) Anmelder: Fresenius Medical Care Deutschland GmbH, 61352 Bad Homburg (DE); Fresenius Medical Care AG & Co. KGaA, 61352 Bad Homburg (DE)
(72) Erfinder: LINDEMANN, Robert, 65193 Wiesbaden (DE); HELLHUND, Jonas, 60438 Frankfurt (DE); FISCHER, Gerome, 99947 Weberstedt (DE); PETERS, Arne, 61352 Bad Homburg (DE)
(74) Vertreter: Ricker, Mathias

(57) **Zusammenfassung**

Die Erfindung betrifft Verfahren sowie ein Datenverarbeitungssystem zum Sichern von Daten gegen unautorisierten Zugriff sowie zum Zugriff darauf. Das Verfahren zum Sichern umfasst: Erfassen oder Erzeugen der zu sichernden Daten und Verschlüsseln derselben mittels eines Verschlüsselungsverfahrens, welches so ausgestaltet ist, dass die daraus resultierenden verschlüsselte Daten selbst bei Kenntnis des zu ihrer Entschlüsselung vorgesehenen geheimen kryptographischen Schlüssels nicht stückweise, sondern nur in ihrer Gesamtheit entschlüsselt werden können; Fragmentieren der verschlüsselten Daten in zumindest zwei Datenfragmente, die jeweils individuell eine echte Teilmenge und zusammen die Gesamtheit der verschlüsselten Daten repräsentieren; Abspeichern der Datenfragmente über eine Mehrzahl von jeweils nicht-flüchtigen ersten Datenspeichervorrichtungen hinweg verteilt, wobei zumindest zwei der Datenfragmente in unabhängig voneinander gehostete Datenspeichervorrichtungen aus der Mehrzahl der ersten Datenspeichervorrichtungen gespeichert werden; und Abspeichern oder Veranlassen einer Abspeicherung von Ereignisdaten, welche, ohne die zu sichernden Daten oder Datenfragmente oder deren jeweilige Speicherorte selbst zu repräsentieren, das erfolgte Fragmentieren, das Abspeichern der Datenfragmente, oder beides jeweils dauerhaft als aufgetretenes Ereignis dokumentieren, in zumindest einem Distributed-Ledger.

## Beschreibung

Die vorliegende Erfindung betrifft ein Verfahren sowie ein Datenverarbeitungssystem zum Sichern von Daten, wie insbesondere medizinischen Patientendaten, gegen unautorisierten Zugriff sowie ein Verfahren zum Zugriff auf solche gesicherten Daten. Darüber hinaus betrifft die Erfindung ein zur Ausführung der Verfahren konfiguriertes Computerprogramm bzw. ein Computerprogrammprodukt, welches ein solches Computerprogramm aufweist.

Im Rahmen der immer größer werdenden Bedeutung von Daten für verschiedenste Anwendungen, ist es einerseits wünschenswert, so effektiv und effizient als möglich verschiedenste Daten zu erfassen, zu verarbeiten, zu speichern und auch miteinander zu verknüpfen. In vielen Fällen wäre es dazu vorteilhaft, solcherlei verschiedenen Daten auf einem oder mehreren unter gemeinsamer Kontrolle stehen Datenverarbeitungsanlagen, insbesondere Servern, zu hosten.

Andererseits bestehen bezüglich bestimmter Datenkategorien, meist länderspezifische gesetzliche Vorschriften, die beispielsweise vorschreiben, dass Daten, welche die Bürger des entsprechenden Landes betreffen, nur auf in dem Land selbst physisch vorhandenen Servern gehostet werden dürfen. Auch für andere personenbezogene Daten, beispielsweise medizinische Patientendaten, gelten oft strenge Schutzbestimmungen gegen einen unautorisierten Zugriff, insbesondere auch Datenakkumulation, die einem gemeinsamen Hosten solcher Daten entgegenstehen können. Dies kann zur Folge haben, dass solche Daten oftmals für gewünschte Auswertungen nicht ausreichend, insbesondere nicht einfach zugänglich, zur Verfügung stehen, was insbesondere ein Hindernis für den technischen, wissenschaftlichen oder medizinischen Fortschritt darstellen kann, und das insbesondere auch dann, wenn die betroffenen Personen dieser Art von Auswertung zustimmen würden. Auch ein einfacher Zugriff auf die Daten für den Dateninhaber selbst ist somit erschwert.

Die asymmetrische Kryptographie, die manchmal auch als "Public Key Kryptographie" oder "Public/Private Key Kryptographie" bezeichnet wird, ist eine bekannte Technologie, die auf einem kryptographischen System basiert, das Schlüsselpaare verwendet, wobei jedes Schlüsselpaar einen öffentlichen Schlüssel und einen privaten Schlüssel umfasst. Die öffentlichen Schlüssel können weit verbreitet werden und sind in der Regel sogar öffentlich zugänglich, während die privaten Schlüssel geheim gehalten werden und in der Regel nur ihrem Besitzer oder Inhaber bekannt sind. Die asymmetrische Kryptographie ermöglicht sowohl (i) die Authentifizierung, d.h. wenn der öffentliche Schlüssel verwendet wird, um zu überprüfen, ob ein Inhaber des gepaarten privaten Schlüssels eine bestimmte Information, z.B. eine Nachricht oder gespeicherte Daten, die die Information enthalten, durch digitale Signatur mit seinem privaten Schlüssel erzeugt hat, als auch (ii) den Schutz von Informationen, z.B. eine Nachricht oder gespeicherte Daten, durch Verschlüsselung, wobei nur der Eigentümer/Halter des gepaarten privaten Schlüssels die mit dem öffentlichen Schlüssel verschlüsselte Nachricht von jemand anderem entschlüsseln kann. Neben der asymmetrischen Kryptographie existiert auch die symmetrische Kryptographie, bei der zum Verschlüsseln und nachfolgenden Entschlüsseln der gleiche Schlüssel zum Einsatz kommt.

In jüngster Zeit wurden verschiedene sogenannte "Distributed Ledger"-Techniken entwickelt, wobei es sich um Techniken zur dezentralen Erstellung und Verwaltung von transaktionsbezogenen Datenbanken bzw. digitalen Hauptbüchern handelt. Im Gegensatz zum klassischen Ansatz, bei dem ein Hauptbuch in der Regel von nur einer Instanz verwaltet wird, werden hier dezentral beliebig viele prinzipiell gleichgestellte Kopien des sog. "Ledgers" von unterschiedlichen Parteien unterhalten. Durch geeignete Maßnahmen wird dafür gesorgt, dass neu hinzuzufügende Transaktionen in allen Kopien des Ledgers übernommen werden und dass es zu einer Übereinkunft (Konsensus) über den jeweils aktuellen Stand des Ledgers kommt.

Die derzeit wohl bekannteste "Distributed Ledger"-Technik ist die "Blockchain"-Technologie. Eine Blockchain ist ein öffentliches Hauptbuch in Form einer verteilten Datenbank, die eine Vielzahl von Datenblöcken enthält und eine ständig wachsende Liste von Datensätzen führt und gegen Manipulationen und Revisionen durch kryptografische Mittel gesichert ist. Eine prominente Anwendung der Blockchain-Technologie ist die virtuelle Bitcoin-Währung für den Zahlungsverkehr im Internet. Eine weitere bekannte Blockchain-Plattform wird beispielsweise durch das Projekt Ethereum bereitgestellt. Im Wesentlichen kann eine Blockchain als ein dezentrales Protokoll zur Protokollierung von Transaktionen zwischen Partnern bezeichnet werden, das alle Änderungen an seiner verteilten Datenbank transparent erfasst, speichert und "für immer", d.h. solange die Blockchain existiert, speichert. Das Speichern von Informationen in einer Blockchain beinhaltet das digitale Signieren der Informationen, die in einem Block der Blockchain gespeichert werden sollen. Darüber hinaus beinhaltet die Aufrechterhaltung der Blockchain einen Prozess namens "Blockchain Mining", bei dem sogenannte "Miner" als Teil der Blockchain-Infrastruktur jeden Block überprüfen und versiegeln, so dass die darin enthaltenen Informationen "für immer" gespeichert werden und der Block nicht mehr verändert werden kann.

Eine weitere hier beispielhaft aufgeführte neue Distributed-Ledger-Technik ist unter dem Namen "Tangle" bekannt, einer block- und zulassungslosen Distributed-Ledger-Architektur, die skalierbar und leichtgewichtig ist und einen Konsens in einem dezentralen Peer-to-Peer-System ermöglicht. Eine prominente verwandte Technologie, die das Tangle als technische Basis verwendet, ist bekannt als "IOTA", eine transaktionale Abwicklungs- und Datenintegritätsschicht für das Internet der Dinge.

Der vorliegenden Erfindung liegt die Aufgabe zugrunde, ein verbessertes Verfahren und ein Datenverarbeitungssystem zum Sichern von Daten gegen unautorisierten Zugriff anzugeben, mit denen nachweisbar separat voneinander gehostete Daten auf gegen unautorisierten Zugriff gesicherte Weise gemeinsam verfügbar gemacht werden können.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der Erfindung betrifft ein, insbesondere computerimplementiertes, Verfahren zum Sichern von Daten mittels eines Datenverarbeitungssystems gegen unautorisierten Zugriff. Das Verfahren weist auf: (i) Erfassen oder Erzeugen der zu sichernden Daten und Verschlüsseln derselben mittels eines Verschlüsselungsverfahrens - wie beispielsweise eines asymmetrischen Verschlüsselungsverfahrens wie etwa des RSA oder verwandter Verfahren -, welches so ausgestaltet ist, dass die daraus resultierenden verschlüsselte Daten selbst bei Kenntnis des zu ihrer Entschlüsselung vorgesehenen geheimen kryptographischen Schlüssels nicht stückweise, sondern nur in ihrer Gesamtheit entschlüsselt werden können; (ii) Fragmentieren der verschlüsselten Daten in zumindest zwei Datenfragmente, die jeweils individuell eine echte Teilmenge und zusammen die Gesamtheit der verschlüsselten Daten repräsentieren; und (iii) Abspeichern der Datenfragmente über eine Mehrzahl von jeweils nicht-flüchtigen ersten Datenspeichervorrichtungen hinweg verteilt, wobei zumindest zwei der Datenfragmente in unabhängig voneinander gehostete, insbesondere von verschiedenen unabhängigen Betreibern gehostete, Datenspeichervorrichtungen aus der Mehrzahl der ersten Datenspeichervorrichtungen gespeichert werden.

Unter dem "Erfassen der zu sichernden Daten" kann hier im Sinne der Erfindung insbesondere ein Erfassen einer Eingabe der Daten an einer Mensch-Maschine-Schnittstelle oder ein Empfangen der Daten über eine Kommunikationsschnittstelle, oder eine Kombination aus beidem zu verstehen sein.

Unter einer "Datenspeichervorrichtung" oder kurz "Speichervorrichtung" im Sinne der Erfindung ist (i) eine einzelne Vorrichtung oder (ii) ein mehrere Datenspeichervorrichtungen aufweisendes System, jeweils zum Speichern von Daten, zu verstehen. Insbesondere kann eine Datenspeichervorrichtung einen oder mehrere Festplattenspeicher, Halbleiterspeicher (z.B. RAM- oder Flash-Speichervorrichtungen) oder mehrere verschiedenen Datenspeichertypen sowie einen oder mehrere Speichercontroller aufweisen. Unter einer "nicht-flüchtigen" Datenspeichervorrichtung (non-volatile memory, NVM) ist eine Datenspeichervorrichtung zu verstehen, die - anders als flüchtige Informationsspeicher, wie etwa Speicher mit wahlfreiem Zugriff (engl. Random Access Memory, RAM) - die in ihnen gespeicherten Daten nicht verliert, wenn ihre Energieversorgung unterbrochen wird.

Zwei oder mehr Datenspeichervorrichtungen sind im Sinne der Erfindung "unabhängig voneinander gehostet", wenn sie nicht zu einem selben Computersystem gehören oder durch eine selbes System, z. B. ein selbes Computersystem wie etwa ein Server oder Serververbund, angesteuert werden. Ihr Betrieb erfolgt somit unabhängig voneinander, insbesondere so, dass die Datenspeichervorrichtungen von verschiedenen unabhängigen Betreibern bzw. deren unabhängigen Computersystemen betrieben bzw. gesteuert werden können und insbesondere der Zugriff auf die verschiedenen Datenspeichervorrichtungen unabhängig voneinander kontrolliert wird bzw. werden kann.

Bei dem vorgenannten Verfahren werden die einem Benutzer, beispielsweise einem Patienten, zugeordneten zu sichernden Daten verschlüsselt, wobei nur der Benutzer über den zur Entschlüsselung erforderliche kryptographischen Schlüssel verfügt bzw. verfügen kann (erste Sicherungsschicht). Des Weiteren werden die zu sichernden Daten nach der Verschlüsselung fragmentiert und auf getrennt gehosteten Datenspeichervorrichtungen verteilt gespeichert (zweite Sicherungsschicht). Ein Hosting auf nur einem System, z.B. Server, bzw. unter Kontrolle nur einer Entität wird somit vermieden, so dass den o.g. gesetzlichen Anforderungen genüge getan wird.

Nachfolgend werden bevorzugte Ausführungsformen des Verfahrens beschrieben, die jeweils, soweit dies nicht ausdrücklich ausgeschlossen wird oder technisch unmöglich ist, beliebig miteinander sowie mit den weiteren beschriebenen anderen Aspekten der Erfindung kombiniert werden können.

Gemäß einigen Ausführungsformen weist das Verfahren des Weiteren auf: Abspeichern oder Veranlassen einer Abspeicherung von Ereignisdaten auf, welche, ohne die zu sichernden Daten oder Datenfragmente oder deren jeweilige Speicherorte selbst zu repräsentieren, das erfolgte Fragmentieren, das Abspeichern der Datenfragmente, oder beides, insbesondere eine Kombination daraus, jeweils dauerhaft als aufgetretenes Ereignis dokumentieren, in zumindest einem Distributed-Ledger, wie etwa einer oder mehreren Blockchains. -Das Fragmentieren und das verteilte Abspeichern in einem oder mehreren Distributed Ledgers, z.B. Blockchains, wird somit dauerhaft und unverfälschbar dokumentiert, dies jedoch so, dass die zu sichernden Daten oder Informationen zu deren verteilten Speicherorten selbst dabei nicht in einem Distributed Ledger abgelegt werden. Auf diese Weise wird der Vorteil das beständigen Dokumentierens genutzt, ohne dabei gleichzeitig den Nachteil eines nach außen sichtbaren Festschreibens der zu sichernden Daten oder ihrer Speicherorte in Kauf nehmen zu müssen.

Gemäß einigen Ausführungsformen werden zwei oder mehr der unabhängig voneinander gehosteten Datenspeichervorrichtungen in voneinander verschiedenen Jurisdiktionen angeordnet. So kann erschwert oder sogar verhindert werden, dass von einer einzigen Jurisdiktion aus eine Verfügbarmachung sämtlicher über die verschiedenen Datenspeichervorrichtungen hinweg verteilten Datenfragmente angeordnet werden kann.

Gemäß einigen Ausführungsformen weist das Verfahren des Weiteren ein Abspeichern von Verweisen oder Verweisketten (d.h. verkettete bzw. seriell verknüpfte Verweise), die jeweils eine Verknüpfung zwischen einer Identität - etwa einem zugeordneten Namen oder einer anderen zugeordneten Bezeichnung - der zu sichernden Daten und den jeweiligen Speicherorten der zugehörigen in den ersten Datenspeichervorrichtungen gespeicherten Datenfragmente definieren, in zumindest einer, bevorzugt von den ersten Speichervorrichtungen separat ausgebildeten, Verweisverwaltungsinstanz (nachfolgend auch als "Librarian" bezeichnet) auf.

Diese Verweise bzw. Verweisketten können im datentechnischen Sinne insbesondere als eine Zwischenschicht zwischen den Datenlieferanten oder Datenempfängern der zu sichernden Daten einerseits und den tatsächlichen verteilten Speicherorten dazu andererseits betrachtet werden. Dies kann beispielsweise so geschehen, dass zwei oder drei intermediäre Zuordnungsvorschriften in Form einer Verweiskette geschaffen werden, die jeweils einzeln ein Verzeichnis darstellen, welches eine Transformation im Rahmen der Verweiskette zwischen einer Eingangsseite und einer Ausgangsseite des Verweises abbildet, und die zusammen als Verweiskette insgesamt die Zwischenschicht repräsentieren. Dabei kennt diese Zwischenschicht die zu sichernden Daten selbst jedoch nicht. Einer oder mehrere der Verweise können insbesondere mittels Tabellen oder verwandten, insbesondere äquivalenten, Datenstrukturen und/oder datentechnischer Links (z.B. Hyperlinks o.ä.) oder Zeigern (Pointer) implementiert werden.

Gemäß einigen Ausführungsformen hierzu umfasst das Abspeichern von Verweisketten, ein Abspeichern (i) einer ersten Gruppe von Verweisen ("erste Instanz"), die jeweils eine Verknüpfung zwischen einer Identität der zu sichernden Daten und einem zugeordneten der Datenfragmente sowie einer Datenspeichervorrichtung zur Sicherung des jeweiligen Datenfragments definieren, und (ii) einer zweiten Gruppe von Verweisen ("zweite Instanz"), die jeweils eine Verknüpfung zwischen den Datenfragmenten und ihren jeweiligen Speicherorten in den ersten Datenspeichervorrichtungen definieren, umfasst. Die erste Gruppe von Verweisen und die zweite Gruppe von Verweisen werden dabei jeweils separat voneinander durch verschiedene Hosts gehostet. Somit realisieren die jeweils aus einem Verweis aus der ersten Gruppe und einem korrespondierenden Verweis aus der zweiten Gruppe gebildeten Verweisketten insgesamt einen Verweis von einer Identität der zu sichernden Daten zu den jeweiligen Speicherorten der in den ersten Datenspeichervorrichtungen den zu sichernden Daten zugehörigen gespeicherten Datenfragmente. Die von der ersten Gruppe separate Implementierung der Verweise der zweiten Gruppe kann insbesondere dazu genutzt werden, das erreichbare Sicherheitsniveau zu erhöhen. Dies gilt vor allem, wenn die beiden Gruppen separat voneinander gehostet werden.

Eine oder mehrere, insbesondere sämtliche der Verweisketten können, ohne darauf beschränkt zu sein, insbesondere aus genau einem Verweis aus der ersten Gruppe und einem korrespondierenden Verweis aus der zweiten Gruppe bestehen. Außerdem lassen sich die Verweise der ersten und zweiten Gruppe somit unabhängig voneinander dynamisch verändern, was insbesondere dazu genutzt werden kann, durch von der ersten Gruppe unabhängige Änderung der Verweise der zweiten Gruppe die durch die jeweilige Verweiskette gelieferte Verweisung auf sich dynamisch ändernde Speicherorte für die Datenfragmente aktuell zu halten.

Ein zweiter Aspekt der Erfindung betrifft ein Verfahren zum Zugriff auf gemäß dem vorgenannten Verfahren nach dem ersten Aspekt gesicherte Daten. Das Zugriffsverfahren, welches insbesondere als Verfahrensabschnitt oder -modul des Verfahrens nach dem ersten Aspekt oder separat davon implementiert sein kann weist auf: (i) Erzeugen oder Empfangen einer Zugriffsanfrage für einen Lesezugriff auf die zu gesicherten Daten; (ii) Ermitteln der jeweiligen Speicherorte der den zu lesenden Daten zugeordneten und in den ersten Datenspeichervorrichtungen gespeicherten Datenfragmente mittels der zumindest einen Verweisverwaltungsinstanz; (iii) Bereitstellen, auf Basis ihrer ermittelten Speicherorte, (iii-1) der Datenfragmente selbst, (iii-2) von jeweiligen Adressen der Speicherorte für einen Lesezugriff auf die Datenfragmente. Auf diese Weise werden Zugriffe auf die an den verschiedenen Speicherorten abgelegten Datenfragmente und somit auf die dadurch repräsentierten zu sichernden Daten insgesamt über die die Zwischenschicht bereitstellende zumindest eine Verweisverwaltungsinstanz ermöglicht. Nur diese weiß, wo und wie zu einem beliebigen Zeitpunkt die verschiedenen Datensätze (also die Daten, die im Rahmen des Zugriffs angefordert werden) in Datenfragmente aufgebrochen sind und an welchem Speicherort diese Datenfragmente jeweils abgelegt und über eine entsprechende Adressierung abrufbar sind.

Gemäß einigen weiterer Ausführungsformen hierzu wird ein Lesezugriff auf die Datenfragmente mittels entsprechender temporärer Adressen für deren jeweilige Speicherorte bereitgestellt oder erfolgt mittels dieser. Nach einem erfolgten Lesezugriff auf die Datenfragmente, werden sodann die temporären Adressen so abgeändert, dass dadurch ein nachfolgender Zugriff auf dieselben Datenfragmente unter wiederholter Nutzung derselben temporären Adressen unmöglich wird.

Die Änderung kann dabei insbesondere sämtliche temporären Adressen der beteiligten Datenspeichervorrichtungen oder aber nur um die am Lesezugriff beteiligten temporären Adressen handeln. Die im Rahmen des ersten Zugriffs verfügbare Information über die Speicherorte eines Datenfragments aus der zugehörigen ersten Zugriffsanfrage ("Query") wird somit nach dieser Zugriffsanfrage wertlos, weil sich aufgrund der Änderung der temporären Adressen die Routen zu den Daten bei jeder weiteren Zugriffsanfrage ändern. Folglich kann nicht zweimal über dieselbe Route auf dieselben Daten zugegriffen werden.

Das Unmöglichmachen eines erneuten Zugriffs auf die Datenfragmente mittels der bereits zuvor benutzten temporären Adressen kann insbesondere dadurch erfolgen, dass die temporären Adressen so abgeändert werden, dass sie an keinen validen Speicherort verweisen, von dem Daten abgerufen werden könnten. So werden bei jedem weiteren Zugriffsversuch auf Basis derselben temporären Adressen, d.h. derselben Routen, gar keine Daten mehr gefunden. Die beim ersten Zugriff verwendeten Adressinformationen entsprechen somit hier einem Einmallink, der nach dem ersten Aufrufen ins "Nichts" führt. So kann die Sicherheit der zu sichernden Daten weiter erhöht werden.

Gemäß einigen Ausführungsformen weist das Verfahren des Weiteren ein Abspeichern oder Veranlassen einer Abspeicherung von Ereignisdaten in den zumindest einen Distributed-Ledger auf, welche eines oder mehrere der folgenden mit der Zugriffsanfrage verbundenen Schritte insgesamt oder individuell als Ereignis dokumentieren: (i) das Erzeugen oder Empfangen der Zugriffsanfrage; (ii) das Bereitstellen des Lesezugriffs, der Datenfragmente oder der rekonstruierten Daten selbst; (iii) einen Zugriffsversuch oder einen tatsächlich erfolgten Zugriff auf eines oder mehrere der Datenfragmente. Auf diese Weise werden versuchte und erfolgreiche Zugriffe auf die gesicherten Daten in dem zumindest einen Distributed Ledger, z.B. einer Blockchain, dokumentiert, ohne dass dabei jedoch Speicherort oder Dateninhalt preisgegeben werden.

Zusätzlich ist es denkbar, dass - insbesondere zur Aufdeckung potentieller Missbrauchsversuche - auch wiederholte Zugriffsanfragen auf Basis derselben Adressierung dokumentiert werden. Die Dokumentation von Zugriffen kann insbesondere über die "klartextlesbare" Bezeichnung von Daten, insbesondere Datenfragmenten über Fragmentnamen, erfolgen. Daher ist es irrelevant, wie die Route vom Benutzer (per Query) zum jeweiligen Data Fragment aussah. Insgesamt tragen die vorgenannten Dokumentationsmöglichkeiten wiederum zur Steigerung des erreichbaren Sicherheitsniveaus bei, da insbesondere auch erfolglose Zugriffsversuche, die etwa von nichtautorisierten Benutzern stammen können, dokumentiert werden, so dass diesen nachgegangen werden kann, um ggf. weitere Sicherheitsmaßnahmen zu ergreifen. Außerdem lässt sich so zweifelsfrei herausfinden und belegen, ob bzw. welche Zugriffe oder Zugriffsversuche tatsächlich erfolgt sind und welche nicht. Im letzteren Fall kann somit insbesondere eine Unversehrtheit bzw. Geheimhaltung von verfahrensgemäß gesicherten personenbezogenen oder anderen vertraulichen Daten belegt werden.

Gemäß einigen Ausführungsformen weist das Verfahren des Weiteren auf: (i) Durchführen eines Lesezugriffs auf die in den ersten Datenspeichervorrichtungen gespeicherten Datenfragmente und Rekonstruieren der zu sichernden Daten mittels Zusammenfügen und Entschlüsseln der Gesamtheit der dabei gelesenen Datenfragmente; (ii) neues Verschlüsseln der rekonstruierten Daten mittels eines von dem ursprünglich zur Verschlüsselung der zu sichernden Daten unterschiedlichen kryptographischen Schlüssels; (iii) Fragmentieren der aus dieser neuen Verschlüsselung resultierenden Daten in zumindest zwei neue Datenfragmente, die jeweils individuell eine echte Teilmenge und zusammen die Gesamtheit dieser neu verschlüsselten Daten darstellen; (iv) Verteilen der neuen Datenfragmente über eine Mehrzahl von jeweils nicht-flüchtigen zweiten Datenspeichervorrichtungen hinweg zur jeweiligen dortigen Abspeicherung, wobei zumindest zwei der Datenfragmente in unabhängig voneinander gehostete Datenspeichervorrichtungen aus der Mehrzahl der zweiten Datenspeichervorrichtungen gespeichert werden; (v) Abspeichern oder Veranlassen einer Abspeicherung von Ereignisdaten, welche, ohne die rekonstruierten Daten oder die Datenfragmente oder deren jeweilige Speicherorte selbst zu repräsentieren, den Lesezugriff, das erfolgte Fragmentieren der erneut verschlüsselten rekonstruierten Daten oder das Abspeichern der neuen Datenfragmente jeweils dauerhaft als aufgetretenes Ereignis dokumentieren, in dem zumindest einen Distributed-Ledger.

Auf diese Weise werden die erfolgreich gelesenen Daten somit entsprechend dem ursprünglich zu ihrer Sicherung verwendeten Verfahren erneut, jedoch unter Verwendung eines anderen kryptographischen Schlüssels, ggf. einer anderen Fragmentierung, und/oder anderen Verteilung auf zweite Datenspeichervorrichtungen, die entweder von den ersten Datenspeichervorrichtungen verschieden sein können oder aber zumindest teilweise mit diesen identisch sein können, verteilt. Somit ist ein erneuter Zugriff auf Basis der für den ersten Zugriff verwendeten Zugriffsinformationen nicht mehr möglich, was ebenfalls zur Erhöhung der erreichbaren Sicherheit der zu sichernden Daten beiträgt.

Gemäß einigen Ausführungsformen hierzu weist das Verfahren des Weiteren ein Bereitstellen des für die neue Verschlüsselung eingesetzten kryptographischen Schlüssels ausschließlich an einen oder mehrere als Schlüsselinhaber vorgesehene berechtigte Nutzer auf. So kann einem unerlaubten Zugriff auf die gesicherten Daten begegnet werden.

Gemäß einigen Ausführungsformen erfolgt der Lesezugriff in Reaktion auf eine Zugriffsanfrage eines berechtigten Nutzers (bzw. Nutzergeräts) durch eine von diesem separate Schlüsselverwaltungsinstanz so, dass die Schlüsselverwaltungsinstanz die zum Entschlüsseln und neu Verschlüsseln benötigten kryptographischen Schlüssel aufgrund einer durch die Zugriffsanfrage bedingten Autorisierung durch den berechtigen Nutzer zur Verfügung gestellt bekommt, ohne dass diese Schlüssel dem berechtigten Nutzer selbst zugänglich gemacht werden. So kann die Sicherheit noch weiter erhöht werden. Insbesondere kann dazu eine zentrale und gut gegen unerlaubte Zugriffe gesicherte Schlüsselverwaltungsinstanz eingesetzt werden, um die Schlüssel verschiedener Nutzer zu speichern und diese selektiv nach einer von einem der Nutzer stammenden Autorisierung für die jeweilige Ver- bzw. Entschlüsselung der Daten dieses Nutzers zur Verfügung zu stellen.

Zudem kann das Verfahren gemäß einigen Ausführungsformen vorsehen, dass im Rahmen der neuen Speicherung der Datenfragmente in den zweiten Speichervorrichtungen nicht mehr benötigte Speicherorte in den ersten Datenspeichervorrichtungen für eine anderweitige Verwendung freigegeben werden, insbesondere zu Speicherung anderer zu sichernder Daten.

Die nachfolgend beschriebenen Ausführungsformen können gleichermaßen auf die Verfahren nach dem ersten und/oder dem zweiten Aspekt angewandt werden:
Gemäß einigen Ausführungsformen weist das Verfahren des Weiteren ein Abspeichern von Duplikaten der Datenfragmente in dritte, unabhängig voneinander und von den ersten Speichereinrichtungen gehostete, jeweils nicht-flüchtige Datenspeichervorrichtungen auf, so dass zumindest zwei der Duplikate zu verschiedenen Datenfragmenten über zwei nicht gemeinsam gehostete dritte Datenspeichervorrichtungen hinweg verteilt gespeichert werden. So lässt sich per Redundanz die sichere Verfügbarkeit der gesicherten Daten weiter erhöhen, insbesondere im Hinblick auf mögliche technische Defekte bei den ersten Speichervorrichtungen oder den Zugriffswegen darauf.

Bei einigen dieser Ausführungsformen sind zwei oder mehr der unabhängig voneinander gehosteten dritten Datenspeichervorrichtungen in voneinander verschiedenen Jurisdiktionen angeordnet. So kann erschwert oder sogar verhindert werden, dass von einer einzigen Jurisdiktion aus eine Verfügbarmachung sämtlicher über die verschiedenen dritten Datenspeichervorrichtungen hinweg verteilten Duplikate der Datenfragmente angeordnet werden kann.

Gemäß einigen Ausführungsformen werden in dem Datenverarbeitungssystem die zu sichernden Daten bzw. bereits gesicherten im gesamten Verfahrensverlauf, soweit sie dabei insgesamt oder anteilig in unverschlüsselter Form überhaupt in dem Datenverarbeitungssystem außerhalb der fragmentierten und verteilten Speicherung in den Datenspeichervorrichtungen zwischengespeichert werden, ausschließlich in einem oder mehreren flüchtigen Datenspeichern temporär zwischengespeichert. Dasselbe kann optional auch für die zu Ihrer Verschlüsselung oder Entschlüsselung genutzten kryptographischen Schlüssel gelten. Somit wird unter Beibehaltung der verfahrensgemäßen Datenverarbeitungsaufgaben eine nicht-flüchtige Speicherung der Daten in ihrer Gesamtheit, welche als Hosting betrachtet werden könnte, vermieden, so dass den diesbezüglichen gesetzlichen Anforderungen zum "non-hosting" bestimmter, insbesondere personenbezogener, Daten genüge getan werden kann. Zudem kann in Bezug auf die Schlüssel deren sichere Handhabung noch verbessert werden, was insbesondere für Schlüssel gilt, deren Geheimhaltung sicherheitsrelevant ist, wie etwa einen privaten Schlüssel eines asymmetrischen Verschlüsselungsverfahrens oder den einen Schlüssel eines symmetrischen Verschlüsselungsverfahrens.

Gemäß einigen Ausführungsformen weist das Verfahren des Weiteren ein aktives Löschen von etwaigen im Verfahrensverlauf in einem oder mehreren flüchtigen Zwischenspeichern in unverschlüsselter Form gespeicherten Repräsentationen der zu sichernden Daten oder des bzw. der zu ihrer Verschlüsselung bzw. Entschlüsselung eingesetzten kryptographischen Schlüssel auf. So kann einem gegebenenfalls ansonsten noch möglichen unerlaubten Auslesen der Daten aus den Speichervorrichtungen begegnet werden. Ein aktives Löschen, etwa mittels ein- oder mehrmaligem Überschreibens mit Zufallswerten, kann insbesondere dann vorteilhaft sein, wenn (i) beim (nicht aktiven) normalen Löschen die Daten selbst regelmäßig nicht gelöscht werden, sondern die betroffenen Speicherorte nur in der Speicherverwaltung als "frei" gekennzeichnet werden, oder (ii) trotz eines Veränderns der Inhalte der Speicherorte beim normalen Löschen dennoch Residuen im Speicher verbleiben, die zumindest mit forensischen Mitteln oder anderen speziellen Analysemitteln noch auf den davor gespeicherten Dateninhalt schließen lassen. So lässt sich mittels aktiven Löschens die erreichbare Sicherheit noch weiter erhöhen.

Ein dritter Aspekt der Erfindung betrifft ein Datenverarbeitungssystem, das konfiguriert ist, das Verfahren nach einem vorgenannten ersten und/oder zweiten Aspekt der Erfindung, insbesondere gemäß einer oder mehrerer der hierin dazu beschriebenen Ausführungsformen, auszuführen. Das Datenverarbeitungssystem kann insbesondere ein oder mehrere nutzerseitige Datenerhebungsgeräte, sowie ein oder mehrere zentrale computerimplementierte Instanzen, wie insbesondere die Verweisverwaltungsinstanz und die vorgenannten ersten sowie ggf. auch zweiten und/oder dritten Datenspeichervorrichtungen aufweisen.

Gemäß einigen Ausführungsformen dazu weist das Datenverarbeitungssystem zur zumindest anteiligen Erfassung oder Erzeugung der zu sichernden Daten ein oder mehrere Datenerhebungsgeräte auf, die jeweils als medizintechnisches Gerät oder als ein Gerät zur Erfassung von Patientendaten ausgebildet sind. So können patientenbezogene Daten unmittelbar am Entstehungsort und ohne Zwischenspeicherung in das Datenverarbeitungssystem übernommen und dort wie vorausgehend beschrieben unter Einhaltung der gesetzlichen Vorschriften zum "Non-hosting" zuverlässig und gegen unerlaubten Zugriff geschützt gesichert werden.

Gemäß einigen dieser Ausführungsformen ist zumindest eines der Datenerhebungsgeräte als medizintechnisches Gerät ausgebildet und weist zumindest eine der folgenden Funktionalitäten auf: (i) Fluidmanagement; (ii) Reinigung von Körperflüssigkeiten; (iii) Blutreinigung, insbesondere Dialyse. Gerade bei dieser Art von Geräten fallen aufgrund der indikationsgemäß meist regelmäßig wiederholten Anwendung regelmäßig signifikante Datenmengen an patientenbezogenen und somit unter besonderem gesetzlichen Schutz stehenden vertraulichen Daten an, so dass eine unmittelbare Anbindung an bzw. eine Integration der Datenerhebungsgeräte in das Datenverarbeitungssystem besonders vorteilhaft sind, um die erforderliche Datensicherheit zu gewährleisten.

Unter medizinischen Fluidmanagementgeräten werden hierbei insbesondere Geräte zur Leitung, Behandlung und/oder Verteilung von Flüssigkeiten und/oder Gasen verstanden, bei denen über eine Fluidleitung Fluid zwischen einem Patienten und einer Fluidbehandlungskomponente und/oder einer Fluidquelle transportiert werden.

Unter Fluidmanagementgeräten werden insbesondere auch Fluidbehandlungsgeräte wie Blutbehandlungsgeräte verstanden, bei denen ein Fluid eines Patienten über eine Fluidleitung einer Fluidbehandlungskomponente zugeführt, durch die Fluidbehandlungskomponente behandelt und über die Fluidleitung, die in einen arteriellen und einen venösen Zweig aufgeteilt werden kann, wieder an den Patienten zurückgegeben wird. Beispiele für solche Blutbehandlungsgeräte sind insbesondere Hämodialysegeräte. Ein solches Blutbehandlungsgerät ist Gegenstand der DE 198 49 787 C1 der Anmelderin, deren Inhalt hiermit vollumfänglich im Offenbarungsgehalt der vorliegenden Anmeldung einbezogen wird.

Die Dialyse ist ein Verfahren zur Blutreinigung von Patienten mit akuter oder chronischer Niereninsuffizienz. Grundsätzlich unterscheidet man hierbei Verfahren mit einem extrakorporalen Blutkreislauf, wie die Hämodialyse, die Hämofiltration oder die Hämodiafiltration und der Peritonealdialyse, die keinen extrakorporalen Blutkreislauf aufweist.

Das Blut wird bei der Hämodialyse in einem extrakorporalen Kreislauf durch die Blutkammer eines Dialysators geleitet, die über eine semipermeable Membran von einer Dialysierflüssigkeitskammer getrennt ist. Die Dialysierflüssigkeitskammer wird von einer die Blutelektrolyte in einer bestimmten Konzentration enthaltenen Dialysierflüssigkeit durchströmt. Die Stoffkonzentration der Blutelektrolyte in der Dialysierflüssigkeit entspricht dabei der Konzentration im Blut eines Gesunden. Während der Behandlung werden das Blut des Patienten und die Dialysierflüssigkeit an beiden Seiten der semipermeablen Membran im Allgemeinen im Gegenstrom mit einer vorgegebenen Flussrate vorbeigeführt. Die harnpflichtigen Stoffe diffundieren durch die Membran von der Blutkammer in die Kammer für Dialysierflüssigkeit, während gleichzeitig im Blut und in der Dialysierflüssigkeit vorhandene Elektrolyte von der Kammer höherer Konzentration zur Kammer niedrigerer Konzentration diffundieren. Wird an der Dialysemembran ein Druckgradient von der Blutseite zur Dialysatseite aufgebaut, beispielsweise durch eine Pumpe, die flussabwärts des Dialysefilters auf der Dialysatseite Dialysat aus dem Dialysatkreislauf entzieht, tritt Wasser aus dem Patientenblut über die Dialysemembran in den Dialysatkreislauf über. Dieser Vorgang der Ultrafiltration führt zu einer gewünschten Entwässerung des Patientenbluts.

Bei der Hämofiltration wird dem Patientenblut durch Anlegen eines Transmembrandrucks im Dialysator Ultrafiltrat entzogen, ohne dass Dialysierflüssigkeit auf der dem Patientenblut gegenüber liegenden Seite der Membran des Dialysators vorbeigeführt wird. Zusätzlich kann dem Patientenblut eine sterile und pyrogenfreie Substituatslösung zugesetzt werden. Je nachdem, ob diese Substituatslösung stromaufwärts des Dialysators zugesetzt wird oder stromabwärts, spricht man von Prä- oder Postdilution. Der Stoffaustausch erfolgt bei der Hämofiltration konvektiv.

Die Hämodiafiltration kombiniert die Verfahren der Hämodialyse und der Hämofiltration. Es findet sowohl ein diffusiver Stoffaustausch zwischen Patientenblut und Dialysierflüssigkeit über die semipermeable Membran eines Dialysators statt als auch eine Abfiltrierung von Plasmawasser durch einen Druckgradienten an der Membran des Dialysators.

Die Verfahren der Hämodialyse, der Hämofiltration und der Hämodiafiltration, im Folgenden unter dem Begriff Hämodialyse zusammengefasst, werden in der Regel mit automatischen Hämodialysegeräten durchgeführt, wie sie beispielsweise von der Anmelderin unter der Bezeichnung 5008 vertrieben werden.

Die Plasmapherese ist ein Blutbehandlungsverfahren, bei dem das Patientenblut in das Blutplasma und seine korpuskularen Bestandteile (Zellen) aufgetrennt wird. Das abgetrennte Blutplasma wird gereinigt oder durch eine Substitutionslösung ersetzt und das gereinigte Blutplasma oder die Substitutionslösung dem Patienten zurückgegeben.

Bei der Peritonealdialyse wird die Bauchhöhle eines Patienten über einen durch die Bauchdecke geführten Katheter mit einer Dialyseflüssigkeit befüllt, die ein Konzentrationsgefälle gegenüber den körpereigenen Flüssigkeiten aufweist. Über das als Membran wirkende Bauchfell (Peritoneum) treten die im Körper vorliegenden Giftstoffe in die Bauchhöhle über. Nach einigen Stunden wird die sich in der Bauchhöhle des Patienten befindliche, nunmehr verbrauchte Dialyseflüssigkeit ausgetauscht. Durch osmotische Vorgänge kann Wasser aus dem Blut des Patienten über das Bauchfell in die Dialyseflüssigkeit übertreten und den Patienten somit entwässern.

Das Verfahren zur Peritonealdialyse wird in der Regel mit Hilfe von automatischen Peritonealdialysegeräten, wie sie beispielsweise von der Anmelderin unter der Bezeichnung sleep.safe vertrieben werden, durchgeführt.

Ein vierter Aspekt der Erfindung betrifft ein Computerprogram, das Anweisungen aufweist, die bei ihrer Ausführung auf einem Datenverarbeitungssystem nach dem dritten Aspekt der Erfindung, dieses veranlassen, das Verfahren nach dem ersten und/oder zweiten Aspekt der Erfindung auszuführen.

Das Computerprogramm kann insbesondere auf einem nichtflüchtigen Datenträger gespeichert sein. Bevorzugt ist dies ein Datenträger in Form eines optischen Datenträgers oder eines Flashspeichermoduls. Dies kann vorteilhaft sein, wenn das Computerprogramm als solches unabhängig von einer Prozessorplattform gehandelt werden soll, auf der das ein bzw. die mehreren Programme auszuführen sind. In einer anderen Implementierung kann das Computerprogramm als eine Datei auf einer Datenverarbeitungseinheit, insbesondere auf einem Server vorliegen, und über eine Datenverbindung, beispielsweise das Internet oder eine dedizierte Datenverbindung, wie etwa ein proprietäres oder lokales Netzwerk, herunterladbar sein. Zudem kann das Computerprogramm eine Mehrzahl von zusammenwirkenden einzelnen Programmodulen aufweisen.

Das Datenverarbeitungssystem nach dem zweiten Aspekt der Erfindung kann entsprechend einen oder mehrere Programmspeicher aufweisen, in dem das Computerprogramm, möglicherweise auch auf mehrere Programmspeicher verteilt, abgelegt ist. Alternativ kann das Datenverarbeitungssystem auch eingerichtet sein, über eine Kommunikationsverbindung auf ein extern, beispielsweise auf einem oder mehreren Servern oder anderen Datenverarbeitungseinheiten verfügbares Computerprogramm zuzugreifen, insbesondere um mit diesem Daten auszutauschen, die während des Ablaufs des Verfahrens bzw. Computerprogramms Verwendung finden oder Ausgaben des Computerprogramms darstellen.

Die in Bezug auf den ersten bzw. zweiten Aspekt der Erfindung erläuterten Merkmale und Vorteile gelten entsprechend auch für die weiteren Aspekte der Erfindung.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:
**Fig. 1** ein Flussdiagramm zur Veranschaulichung einer ersten beispielhaften Ausführungsform des erfindungsgemäßen Verfahrens nach dem ersten Aspekt der Erfindung zur Sicherung von nutzergenerierten zu sichernden Daten;
**Fig. 2** ein Flussdiagramm zur Veranschaulichung einer alternativen zweiten beispielhaften Ausführungsform des erfindungsgemäßen Verfahrens nach dem ersten Aspekt der Erfindung zur Sicherung von nicht unmittelbar vom Nutzer generierten zu sichernden Daten;
**Fig. 3** ein Flussdiagramm zur Veranschaulichung eines Verfahrens zum Zugriff auf bereits erfindungsgemäß gesicherte Daten gemäß einer beispielhaften Ausführungsform des Zugriffsverfahrens nach dem zweiten Aspekt der Erfindung; und
**Fig. 4** eine Übersichtstabelle zur Illustration der verschiedenen im Rahmen der Verfahren aus den Figuren Fig. 1 bis 3 zum Einsatz kommenden Transformationen.

Zudem zeigen die o.g. Flussdiagramme nicht nur den jeweiligen Verfahrensablauf, sondern auch (in dicker Umrandung) die verschiedenen Elemente eines zur Durchführung des jeweiligen Verfahrensablaufs eingesetzten erfindungsgemäßen beispielhaften Datenverarbeitungssystems.

In den Figuren werden durchgängig dieselben Bezugszeichen für dieselben oder einander entsprechenden Elemente der Erfindung verwendet.

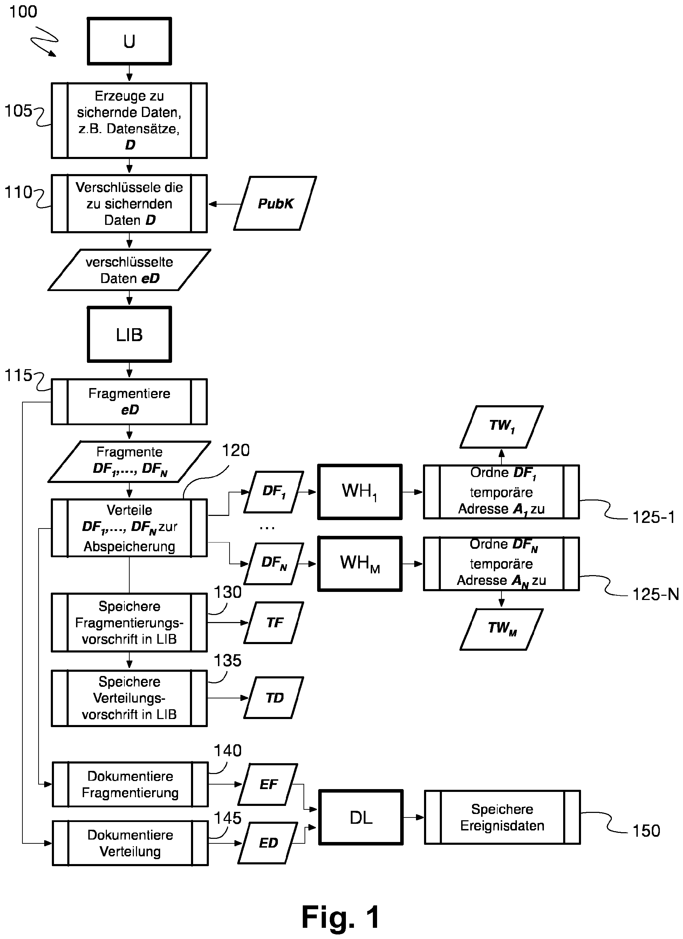

In dem in **Fig. 1** dargestellten Flussdiagramm sind insbesondere folgende Komponenten eines erfindungsgemäßen Datenverarbeitungssystems enthalten, die wie dargestellt miteinander in Wechselwirkung stehen, um das in Fig. 1 illustrierte Verfahren 100 gemeinsam auszuführen: (i) Datenerhebungsgerät U eines Benutzers, beispielsweise eines Patienten oder das zur Behandlung, etwa zur Dialyse, eines bestimmten Patienten eingesetzt wird, (ii) Verweisverwaltungsinstanz ("Librarian") LIB, Distributed Ledger DL, z. B. Blockchain, (iii) Datenspeichervorrichtungen ("Data Warehouse") WH₁...WH_{M}.

Soweit in dem Flussdiagramm entlang seines Verlaufs zwischen einer bestimmten ersten der Systemkomponenten und einer weiter flussabwärts liegenden, unmittelbar nachfolgenden zweiten Systemkomponente ein oder mehrere Verfahrensschritte bzw. Prozesse dargestellt sind, bedeutet dies, dass dieser bzw. diese durch die erste, d.h. die jeweils als nächstes flussaufwärts des Prozesses gelegene, der Systemkomponenten durchgeführt werden. Beispielsweise wird 105 in Fig. 1 durch die Systemkomponente U durchgeführt, während der Schritt 115 durch die Systemkomponente LIB durchgeführt wird.

Das Verfahren 100 kann dabei insbesondere mittels einem oder mehrerer Computerprogramme, die auf einer oder mehreren Komponenten des Systems ablaufen, implementiert sein. Dazu kann das Datenverarbeitungssystem, insbesondere seine betreffenden Komponenten, einen oder mehrere integrierte oder externe (nicht dargestellte) Programmspeicher oder andere Computerprogrammprodukte, insbesondere nichtflüchtige Datenträger, zur Speicherung des bzw. der Computerprogramme aufweisen.

Bei dem in Fig. 1 illustrierten Verfahren 100 werden zu sichernde Daten D durch den Benutzer, bzw. genauer sein Datenerhebungsgerät U, in einem Schritt 105 erzeugt. Dies kann insbesondere beinhalten, dass medizinische Informationen, die mittels einer anhand des Datenerhebungsgeräts U zu Diagnosezwecken durchgeführten medizinischen Messung oder einer durch das Gerät durchgeführte Therapie am Patienten erhoben werden, zusammen mit zugehörigen Patientendaten, wie etwa Name, Alter, Geschlecht usw., in Form eines oder mehrerer entsprechender Datensätze als zu sichernde Daten *D* bereitgestellt werden. Bei dem Datenerhebungsgerät U kann es sich somit insbesondere um ein medizintechnisches Gerät oder ein Gerät zur Erfassung von patientenbezogenen Daten oder eine Kombination aus beidem handeln. Dieses Gerät U kann insbesondere eine Fluidmanagementfunktionalität aufweisen und dazu etwa zur Reinigung von Körperflüssigkeiten, insbesondere zur Blutreinigung (z.B. per Dialyse), eingerichtet sein.

Das Datenerhebungsgerät U kann auch insbesondere so ausgestaltet sein, dass es zum Zwecke der Datenerhebung mit einem, insbesondere mobilen, Computer signalkoppelbar ist, so dass Eingaben oder Datenabfragen von bzw. zu dem Computer ermöglicht sind und die Datenergebungs- bzw. Abruffunktionalität im Wechselspiel zwischen dem Datenerhebungsgerät U und dem daran gekoppelten Computer erfolgen können. Beispielsweise kann ein als Datenerhebungsgerät dienendes medizinisches Fluidmanagementgerät ausgerüstet sein mit: einer Steuervorrichtung, einer Schnittstelle, die zum Datenaustausch mit einem mobilen Computer ausgebildet ist, und mit einer mechanischen Ankoppelvorrichtung, die zum Ankoppeln an ein entsprechend ausgebildetes Gegenstück an dem mobilen Computer ausgebildet ist, wobei die Steuervorrichtung dazu eingerichtet ist, über die Schnittstelle Informationen das medizinische Fluidmanagementgerät und/oder eine Behandlung, die mit dem medizinischen Fluidmanagementgerät durchgeführt wird, betreffend, an den mobilen Computer zu senden und/oder Bedieneingaben, die am mobilen Computer eingegeben werden, oder Steuersignale vom mobilen Computer zu empfangen.

Nun wieder auf das Verfahren 100 selbst bezugnehmend, werden in einem weiteren Schritt 110 die zu sichernden Daten *D* verschlüsselt. Grundsätzlich kann dies mittels eines beliebigen ausreichend sicheren Verschlüsselungsverfahrens erfolgen, wobei symmetrische oder asymmetrische Verschlüsselungsverfahren zum Einsatz kommen können. Im vorliegenden Beispiel des Verfahrens 100 wurde ein asymmetrisches Verschlüsselungsverfahren gewählt, sodass die zu sichernden Daten *D* mittels eines öffentlichen Schlüssels *PubK* eines Öffentlich/Privat (Public/Private)-Schlüsselpaars verschlüsselt werden, um verschlüsselte Daten *eD* zu erhalten und diese an die Verweisverwaltungsinstanz LIB zu übermitteln. Das Schlüsselpaar ist dabei bevorzugt dem Benutzer oder dem das Gerät U nutzenden Patienten zugeordnet. Dem entsprechend sollte nur dieser berechtigte Benutzer bzw. Patient über den zugehörigen privaten Schlüssel *PrivK* des Schlüsselpaares verfügen können, sei es unmittelbar oder mittelbar über eine zwischengeschaltete Schlüsselverwaltungsinstanz K.

Die Verweisverwaltungsinstanz LIB, welche idealerweise von dem Datenerhebungsgerät U separat ausgeführt ist, etwa auf einem zentralen Server des Datenverwaltungssystems mit dem eine Mehrzahl von Datenerhebungsgeräten U in Kommunikationsverbindung stehen können, führt in einem Schritt 115 eine Fragmentierung der verschlüsselten Daten *eD* aus, um eine Mehrzahl *N* von Datenfragmenten, bzw. abgekürzt "Fragmenten", *DF₁* ... *DF_{N}* zu erhalten. Grundsätzlich kann dazu eine beliebige Fragmentierungsvorschrift zum Einsatz kommen, wie etwa eine serielle Aufspaltung der verschlüsselten Daten *eD* in aufeinanderfolgende gleichgroße oder auch verschieden große Datenabschnitte als einzelne Fragmente, solange dabei die Information erhalten wird, wie aus den einzelnen Fragmenten wieder die verschlüsselten Daten *eD* rekonstruiert werden können.

In einem weiteren Schritt 120 werden durch die Verweisverwaltungsinstanz LIB die *N* zuvor erzeugten Fragmente *DF₁* ... *DF_{N}* im Rahmen einer, insbesondere zufällig wählbaren oder einem geheimen Zuordnungsschema folgenden, N:M Zuordnung auf *M* verschiedene Datenspeichervorrichtungen (Data Warehouses) *WH₁... WH_{M}* zur dortigen Abspeicherung verteilt, sodass jede der Datenspeichervorrichtungen *WH₁... WH_{M}* höchstens eine echte Teilmenge der Menge {*DF₁,* ... *,DF_{N}*} der Fragmente erhält und abspeichert und sich somit eine echte Verteilung der Fragmente über zumindest zwei Datenspeichervorrichtungen ergibt. Optional können aus Redundanzgründen die Datenfragmente parallel in weitere nicht-flüchtige Datenspeichervorrichtungen abgelegt werden (nicht dargestellt).

Die Datenspeichervorrichtungen selbst können jeweils eine oder mehrere physische Datenspeichervorrichtungen, beispielsweise Festplatten, Halbleiterspeicherbausteine oder- module, Magnetbänder usw., aufweisen, die logisch, insbesondere mittels einer entsprechenden Adressierung, zu einer Datenspeichervorrichtung zusammengefasst sind.

Zu ihrer Adressierung wird in einem zugeordneten jeweiligen weiteren Schritt 125-1...125-N jedem der Fragmente innerhalb der zugehörigen Datenspeichervorrichtung, in dem es gespeichert ist, eine zugehörige temporäre Adresse *A ∈ {A₁* ... *A_{N}}* zugeordnet, über die es innerhalb der Datenspeichervorrichtungen adressierbar ist. Die Zuordnung der temporären Adressen zu den jeweiligen Fragmenten wird je Datenspeichervorrichtung als zugehörige Zuordnungsvorschrift *TW₁* ... *TW_{M}* gesichert, was insbesondere in Form einer jeweiligen Tabelle oder einer anderen dazu äquivalenten Datenstruktur erfolgen kann. Um auf das Fragment später zuzugreifen zu können, muss für den Zugriff folglich eine Route bekannt sein, die sowohl eine Adresse der betroffenen Datenspeichervorrichtung als auch die zugehörige temporäre Adresse *A* des gesuchten Fragments innerhalb dieser Datenspeichervorrichtung enthält.

Des Weiteren speichert die Verweisverwaltungsinstanz LIB in einem Schritt 130 die zur Fragmentierung eingesetzte Fragmentierungsvorschrift *T_{F}* sowie in einem Schritt 135 die zur Verteilung der Fragmente auf die Datenspeichervorrichtung eingesetzte Verteilungsvorschrift *T_{D}* jeweils in einem der Verweisverwaltungsinstanz LIB selbst zugeordneten Speicher. Auch dies kann beispielsweise mittels einer Datentabelle oder einer äquivalenten Datenstruktur erfolgen.

Zum Zwecke einer unverfälschbaren und stets nachvollziehbaren Dokumentation werden in einem Schritt 140 Ereignisdaten *EF,* welche die erfolgte Fragmentierung kennzeichnen, an zumindest einen Distributed Ledger DL, etwa einer vorbestimmten Blockchain, übermittelt. Ebenso wird in einem Schritt 145 auch die erfolgte Verteilung auf gleiche Weise dokumentiert, indem entsprechende, sie kennzeichnende Ereignisdaten *ED* an den Distributed Ledger DL übermittelt werden, wo EF und ED in einem oder mehreren Schritten 150 gespeichert werden. Dies kann auf bekannte Weise, im Falle einer Blockchain insbesondere mittels Blockchain-Mining erfolgen, wozu auch eine oder mehrere weitere Entitäten, sog. "Miner" zum Einsatz kommen können. Die zu sichernden Daten selbst werden jedoch in keiner Weise im Distributed Ledger gespeichert, insbesondere weder in unverschlüsselter noch in verschlüsselter oder fragmentierter Form.

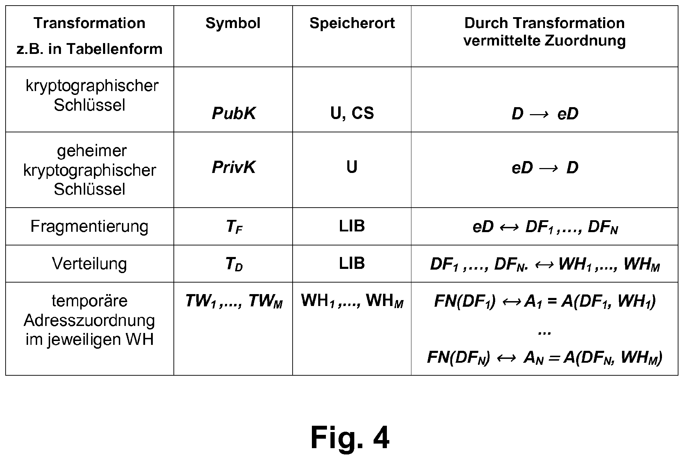

Im Ergebnis werden im Rahmen des Verfahrens 100 somit zu sichernden Daten *D* erzeugt und mithilfe mehrerer Sicherungsschichten, zu denen insbesondere eine Verschlüsselung, eine Fragmentierung, eine Verteilung der Fragmente auf verschiedene Datenspeichervorrichtung, eine dortige temporäre Adressierung sowie eine unverfälschbare Dokumentierung zumindest eines Teils der vorgenannten Vorgänge gehören, gesichert. Dabei bleiben die Daten für einen späteren autorisierten Zugriff erhalten, ohne dass jedoch die Daten von einem einzigen Host gehostet werden. Für einen späteren erfolgreichen Zugriff sind somit eine Reihe verschiedener Informationen erforderlich, die zusammen eine Verweiskette bilden und zu denen insbesondere die für den Zugriff angeforderten Daten zugeordneten in *TW₁* ... *TW_{M}, TF, und TD* jeweils gespeicherten Informationen, sowie der zum Entschlüsseln der im Rahmen des Zugriffs (siehe Fig. 4) rekonstruierten Daten *eD* erforderliche private Schlüssel *PrivK* gehören.

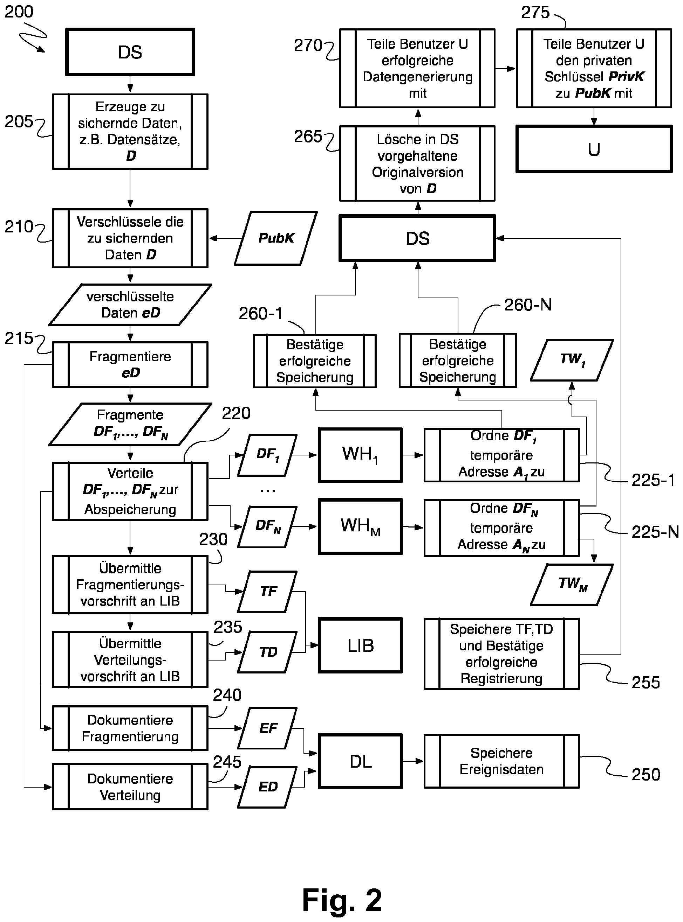

In **Fig. 2** ist eine zum Verfahren 100 alternative Ausführungsform 200 eines erfindungsgemäßen Verfahrens zur Speicherung von zu sichernden Daten dargestellt. Im Gegensatz zum Verfahren 100, werden hier die zu sichernden Daten D nicht vom Benutzer bzw. dessen Datenerhebungsgerät U selbst, sondern durch eine andere Entität DS erzeugt, die insbesondere ein speziell dazu vorgesehener Server sein kann und deshalb im Folgenden als (Datenquellenserver) bezeichnet wird.

Im Rahmen des Verfahrens 200 werden demnach von dem Datenquellenserver DS im Schritt 205 zu sichernden Daten *D* erzeugt und in einem weiteren Schritt 210 unter Verwendung des öffentlichen Schlüssels *PubK* eines berechtigten Dateninhabers, beispielsweise eines bestimmten Patienten, verschlüsselt, um verschlüsselte Daten *eD* zu erhalten. Des Weiteren führt der Datenquellen Server DS im Schritt 215 auch die Fragmentierung der verschlüsselten Daten *eD* aus, um *N* Datenfragmente *DF₁...DF_{N}* zu erhalten und diese in einem noch weiteren Schritt 220 zur jeweiligen Abspeicherung an eine Mehrzahl *M* von Datenspeichervorrichtungen WH₁ bis WH_{M} zu verteilen. Diese in den Schritten 215 bzw. 220 erfolgende Fragmentierung und Verteilung sowie die nachfolgend in den Schritten 225 - 1 bis 225-N erfolgende nachfolgende Zuordnung einer jeweiligen temporären Adresse A ∈ {*A₁* ... *A_{N}*} zu den einzelnen Fragmenten in den jeweiligen Datenspeichervorrichtungen WH₁ bis WH_{M} entsprechen ihrer Art nach jeweils den korrespondierenden Schritten 115, 120 bzw. 125-1 bis 125-N aus Fig. 1.

Zusätzlich wird im Verfahren 200 jedoch den Schritten 125-1 bis 125-N nachfolgend in den Schritten 260-1 bis 260-N eine Bestätigung über eine erfolgreich abgeschlossene Speicherung der Datenfragmente *DF₁* ... *DF_{N}* von den jeweils eine echte Teilmenge der Menge {*DF₁,* ... ,*DF_{N}*} der Datenfragmente speichernden Datenspeichervorrichtungen *WH₁... WH_{M}* an den Datenquellenserver DS übermittelt, um diesen davon in Kenntnis zu setzen.

Des Weiteren werden im Schnitt 230 die Fragmentierungsvorschrift *TF,* sowie im Schritt 235 die Verteilungsvorschrift *TD* an die Verweisverwaltungsinstanz LIB übermittelt, welche im Schritt 255 diese Informationen bei sich abspeichert (Registrierung) und diese Abspeicherung nach deren erfolgreicher Ausführung ebenfalls an den Datenquellenserver DS berichtet.

Wenn der Datenquellenserver DS die Bestätigungsnachrichten aus den Schritten 255 und 260-1 bis 260-M erhalten hat, interpretiert er dies als Bestätigung einer erfolgreichen Abspeicherung der verschlüsselten, fragmentierten und verteilten zu sichernden Daten *D*, sodass er die bislang bei ihm selbst vorgehaltene nunmehr nicht mehr benötigte Originalfassung der Daten *D* im Schritt 265 löscht. Dieses Löschen kann insbesondere ein aktives Löschen umfassen, bei dem die tatsächlichen Inhalte der relevanten Speicherorte, beispielsweise Speicherzellen in einem Halbleiterspeicher, physisch gelöscht werden, was insbesondere mittels mehrfachen Überschreibens mit Zufallsdaten erfolgen kann. Auch andere dem Fachmann bekannte Möglichkeiten zur aktiven Löschung von Datenspeicherinhalten können stattdessen oder zusätzlich eingesetzt werden.

Schließlich werden dem Benutzer, dem die Daten zugeordnet sind bzw. gehören, im Schritt 270 die erfolgreiche Datengenerierung und Abspeicherung mitgeteilt, sowie im Schritt 275 auch der private Schlüssel *PrivK* auf gegen unberechtigten Zugriff gesicherte Weise zur Verfügung gestellt. Alternativ dazu, kann der private Schlüssel auch stattdessen an eine optional zusätzlich im Datenverarbeitungssystem vorgesehene Schlüsselverwaltungsinstanz K übergeben werden, sodass der Benutzer indirekt über diese über seinen privaten Schlüssel *PrivK* verfügen kann, ohne diesen jedoch selbst kennen und unmittelbar besitzen zu müssen.

Beide Verfahren 100 bzw. 200 werden bevorzugt so implementiert, dass keine der daran beteiligten Systemkomponenten des Datenverarbeitungssystems die Gesamtheit der zu sichernden Daten *D* zu irgendeinem Zeitpunkt in einem nichtflüchtigen Datenspeicher speichert bzw. zur Verfügung hat. Dasselbe gilt für das im Weiteren noch beschriebene Datenzugriffsverfahren 300. Somit erfolgt dann zu keinem Zeitpunkt ein nicht-flüchtiges Speichern bzw. Hosting der Gesamtheit der Daten durch eine einzige Instanz und somit unter einheitlicher Kontrolle.

Schließlich werden im Verfahren 200 in den Schritten 240 bis 250 auf eine den Schritten 140-150 des Verfahrens 100 entsprechende Weise im Distributed Ledger DL Ereignisdaten abgespeichert, welche zur unverfälschbaren Dokumentation der erfolgten Erzeugung (Fragmentierung) und Verteilung der Datenfragmente dienen.

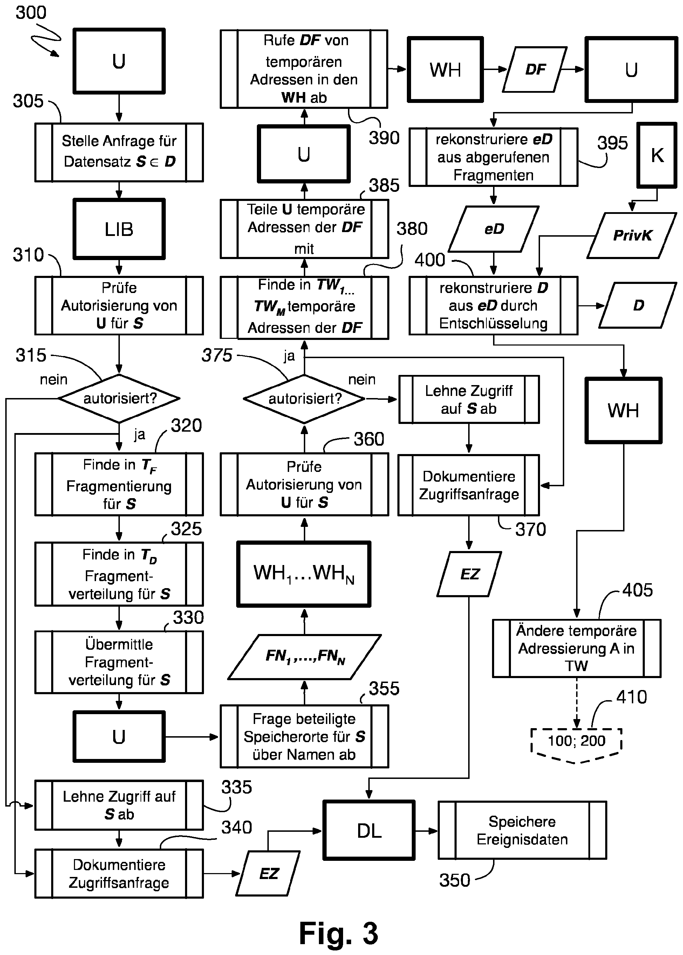

**Fig. 3** illustriert eine beispielhafte Ausführungsform eines Verfahrens bzw. Verfahrensabschnitts 300 zum Zugriff auf bereits gemäß dem Verfahren 100 oder 200 gesicherte Daten *D.* Im vorliegenden Fall möchte ein Benutzer über sein Gerät U, welches das im Verfahren 100 zur Datenerhebung genutzte Gerät, oder aber auch ein anderes geeignetes Gerät sein kann, auf einen in dem Datenverarbeitungssystem gespeicherten Datensatz *S* aus vorausgehend gesicherten Daten *D* zugreifen. Der Datensatz *S* kann sich beispielsweise auf eine bestimmte medizinische Messung oder Therapie für den Benutzer bzw. Patienten, wie etwa eine Dialysesitzung, beziehen.

Zunächst wird in einem Schritt 305 vom Benutzer die Anfrage für den Datensatz S an die Verweisverwaltungsinstanz LIB übermittelt. Dort findet sodann im Schritt 310 eine Prüfung dahingehend statt, ob U dazu autorisiert ist, auf den Datensatz *S* zuzugreifen. Diese Autorisierung kann auf verschiedene Weise erfolgen, wobei insbesondere auch herkömmliche bekannte und Authentifizierungsmethoden zum Einsatz kommen können, beispielsweise die Eingabe einer Geheimzahl PIN oder anderer geheimer zur Identifikation geeigneter Informationen oder die Erfassung eines oder mehrerer biometrischer Merkmale. Wird im Rahmen der Prüfung festgestellt, dass die Anfrage nicht autorisiert ist (315 - nein), so wird im Schritt 335 der Zugriff auf den Datensatz *S* abgelehnt und im Schritt 340 die Zugriffsanfrage, bevorzugt zusätzlich mit der Information, dass diese erfolglos verlaufen ist, als Zugriffsereignis EZ an den Distributed Ledger DL berichtet und dort im Schritt 350 abspeichert. Optional (nicht dargestellt) kann auch zuvor bei oder nach dem Schritt 305 das Auftreten der Zugriffsanfrage für den Datensatz S an den Distributed Ledger DL berichtet und dort abspeichert werden.

Andernfalls (315 - ja), d. h. wenn die Autorisierung erfolgreich verlaufen ist, führt die Verweisverwaltungsinstanz LIB im Schritt 320 eine Suche in der Zuordnungsvorschrift *T_{F}* nach der zum Datensatz *S* gehörenden Fragmentierung durch. Des Weiteren wird im Schritt 325 auf ähnliche Weise in der Zuordnungsvorschrift *T_{D}* nach der zugehörigen Verteilung für die zu *S* gehörende Fragmentierung gesucht. Die in den Schritten 320 und 325 gewonnenen Informationen, die zusammen einen Teil einer Verweiskette darstellen und auch einen jeweiligen Fragmentnamen *FN₁,..,FN_{N}* (zusammenfassend nachfolgend als FN bezeichnet) oder alternativ eine jeweilige andere eindeutige Bezeichnung oder Kennung für jedes der Datenfragmente *DF₁,...,DF_{N}* (zusammenfassend nachfolgend als DF bezeichnet) beinhalten, werden im Schritt 330 an den Benutzer bzw. dessen Gerät U übermittelt.

Mittels des Geräts U werden sodann in einem Schritt 355 die gemäß der zugehörigen Verteilung für die zu *S* gehörende Fragmentierung die betroffenen Fragmentnamen *FN* an die jeweils an deren Speicherung beteiligte Speicherorte *WH₁,...,WH_{M}* (zusammenfassend nachfolgend als WH bezeichnet) übermittelt. Dies kann insbesondere global so geschehen, dass sämtliche Fragmentnamen an sämtliche der insgesamt beteiligten Speicherorte übermittelt werden, oder aber selektiv, sodass jeder Speicherort nur denjenigen bzw. diejenigen Fragmentnamen erhält, der bzw. die zu dem bzw. den in ihm gespeicherten einen oder mehreren Fragmenten korrespondieren.

In den jeweiligen Speicherorten WH wird die jeweilige im Schritt 355 übermittelte Information empfangen und daraufhin zunächst im Schritt 360 lokal nochmals eine Autorisierungsprüfung dahingehend durchgeführt, ob der Benutzer bzw. sein Gerät U Zugriff auf den Datensatz *S* autorisiert ist. Scheitert diese Autorisierung (375 - nein) so wird im Schritt 365 der Zugriff auf den Datensatz *S* bzw. dessen zugehörige Fragmente abgelehnt und die gescheiterte Zugriffsanfrage im Schritt 370 als Zugriffsereignis *EZ* an den Distributed Ledger LD zur Abspeicherung im Schritt 350 übermittelt. Andernfalls (375 - ja) wird die dann erfolgreich autorisierte Zugriffsanfrage ebenfalls im Schritt 370 als entsprechendes Zugriffsereignis *EZ* an den Distributed Ledger LD zur Abspeicherung im Schritt 350 übermittelt. Optional (nicht dargestellt) kann - wie schon vorausgehend beschrieben - auch zuvor bei oder nach dem Schritt 305 das Auftreten der Zugriffsanfrage für den Datensatz S an den Distributed Ledger DL berichtet und dort abspeichert werden.

Im Schritt 380 werden im Anschluss an eine erfolgreiche Autorisierung mittels der jeweiligen Zuordnungsvorschriften *TW1...TW_{M}* die zu den Fragmentnamen *FN* zugehörigen temporären Adressen *A₁,...,A_{N}* (zusammenfassend nachfolgend als A bezeichnet) der Datenfragmente *DF* identifiziert und diese im Schritt 385 an den Benutzer bzw. dessen Gerät U übermittelt.

Auf Basis dieser Informationen kann der Benutzer nun im Schritt 390 die verschiedenen Datenfragmente *DF* mithilfe ihrer nun bekannten temporären Adressen *A* aus den verschiedenen Speicherorten *WH* abrufen, welche diese daraufhin an U übermitteln. Im weiteren Schritt 395 können sodann aus den abgerufenen Datenfragmenten *DF* die gesicherten verschlüsselten Daten *eD* zunächst rekonstruiert und im weiteren Schritt 400 unter Nutzung des dem Benutzer entweder bekannten oder in seinem Auftrag von einer Schlüsselverwaltungsinstanz K bereitgestellten privaten Schlüssels *PrivK* entschlüsselt werden, um schließlich die gewünschten originalen Daten *D zu* erhalten.

Im Anschluss an den erfolgreichen Lesezugriff, frühestens unmittelbar nach Schritt 390, kann in den einzelnen Datenspeichervorrichtungen WH im Schritt 405 eine Änderung der temporären Adressierung vorgenommen werden, so dass die bisher gültigen temporären Adressen *A* in einem weiteren Zugriffsversuch auf die fragmentiert gesicherten Daten *D* bzw. genauer *eD*, nicht mehr erfolgreich eingesetzt werden können. Idealerweise findet die Adressänderung so statt, dass die bisherigen Adressen auf keine gültigen Ziele mehr verweisen und somit ins "Nichts" führen.

Zusätzlich oder alternativ kann vorgesehen sein, in einem Schritt 410 die rekonstruierten Daten *D* mittels eines neuen und vom vorigen Schlüssel *PubK* verschiedenen Schlüssel *PubK'* (der mit einem entsprechenden neuen privaten Schlüssel PrivK' eine Schlüsselpaar bildet) neu zu verschlüsseln und unter erneuter Anwendung eines der Verfahren 100 oder 200 erneut zu sichern. Zur Speicherung der dabei neu generierten Datenfragmente können entweder die bisherigen Datenspeichervorrichtungen oder alternativ auch andere Datenspeichervorrichtungen zum Einsatz kommen, oder eine Kombination aus beiden.

Die **Fig.** 4 stellt eine tabellarische Übersicht über die im Rahmen der Verfahren 100, 200 und 300 aus den Fig. 1 bis 3 verwendeten Informationen *PubK* und *PrivK* zur Ver- bzw. Entschlüsselung, *TF* zur Fragmentierung, *TD zur* Fragmentverteilung und *TW₁* ... *TW_{N}* zur temporären Adressierung, sowie deren bevorzugten Speicherort und die durch sie jeweils vermittelten Transformationen bzw. Zuordnungen dar.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

### BEZUGSZEICHENLISTE

- *A, A₁,...,,A_{N}*: Temporäre Adressen
- DS: Datenquellenserver
- *D*: zu sichernde bzw. gesicherte Daten, insbesondere Datensätze
- *DF*, *DF₁..,.DF_{N}*: Datenfragmente
- *DL*: Distributed Ledger, z. B. Blockchain
- *eD*: verschlüsselte Daten
- *E_{D}*: Dokumentation Verteilungsereignis
- *E_{F}*: Dokumentation Fragementierungsereignis
- *E_{Z}*: Dokumentation Zugriffsereignis
- *FN, FN₁,...,FN_{N}*: Fragmentnamen
- *K*: Schlüsselverwaltungsinstanz
- LIB: Verweisverwaltungsinstanz (Librarian)
- *PrivK*: privater (kryptographischer) Schlüssel
- *PubK*: öffentlicher (kryptographischer) Schlüssel
- *S*: abgerufener Datensatz
- *T_{D}*: Verteilungsvorschrift, z.B. Verteilungstabelle
- *T_{F}*: Fragmentierungsvorschrift, z.B. Fragmentierungstabelle
- *TW, TW₁,...,TW_{N}*: temporäre Adresszuordnungsvorschrift im jeweiligen WH
- U: Benutzer (User) bzw. dessen Datenerhebungsgerät
- WH, WH₁,...,WH_{M}: Datenspeichervorrichtungen

## Patentansprüche

1. Verfahren (100; 200) zum Sichern von Daten (D) mittels eines Datenverarbeitungssystems gegen unautorisierten Zugriff, aufweisend:
Erfassen oder Erzeugen (105; 205) der zu sichernden Daten (D) und Verschlüsseln (110; 210) derselben mittels eines Verschlüsselungsverfahrens, welches so ausgestaltet ist, dass die daraus resultierenden verschlüsselte Daten (eD) selbst bei Kenntnis des zu ihrer Entschlüsselung vorgesehenen geheimen kryptographischen Schlüssels (PrivK) nicht stückweise, sondern nur in ihrer Gesamtheit entschlüsselt werden können;
Fragmentieren (115; 215) der verschlüsselten Daten in zumindest zwei Datenfragmente (DF), die jeweils individuell eine echte Teilmenge und zusammen die Gesamtheit der verschlüsselten Daten (eD) repräsentieren;
Abspeichern (120; 220) der Datenfragmente über eine Mehrzahl von jeweils nicht-flüchtigen ersten Datenspeichervorrichtungen (WH) hinweg verteilt, wobei zumindest zwei der Datenfragmente (DF) in unabhängig voneinander gehostete Datenspeichervorrichtungen aus der Mehrzahl der ersten Datenspeichervorrichtungen (WH) gespeichert werden.

2. Verfahren nach Anspruch 1, des Weiteren aufweisend:
Abspeichern oder Veranlassen einer Abspeicherung (140, 145; 240, 245) von Ereignisdaten (EF, ED), welche, ohne die zu sichernden Daten (D) oder Datenfragmente (DF) selbst zu repräsentieren, das erfolgte Fragmentieren (115; 215), das Abspeichern (120; 220) der Datenfragmente (DF), oder beides jeweils dauerhaft als aufgetretenes Ereignis dokumentieren, in zumindest einem Distributed-Ledger (DL).

3. Verfahren nach einem der vorausgehenden Ansprüche, des Weiteren aufweisend:
Abspeichern (130, 135; 255) von Verweisen oder Verweisketten (TF, TD, TW), die jeweils eine Verknüpfung zwischen einer Identität der zu sichernden Daten (D) und den jeweiligen Speicherorten (WH) der zugehörigen in den ersten Datenspeichervorrichtungen gespeicherten Datenfragmente definieren, in zumindest einer Verweisverwaltungsinstanz (LIB; WH).

4. Verfahren nach Anspruch 3, wobei:
das Abspeichern (130, 135; 255) von Verweisketten (TF, TD, TW), ein Abspeichern einer ersten Gruppe von Verweisen (TF, TD), die jeweils eine Verknüpfung zwischen einer Identität der zu sichernden Daten (D) und einem zugeordneten der Datenfragmente (DF) sowie einer Datenspeichervorrichtung zur Sicherung des jeweiligen Datenfragments (DF) definieren, und einer zweiten Gruppe von Verweisen (TW), die jeweils eine Verknüpfung zwischen den Datenfragmenten (DF) und ihren jeweiligen Speicherorten (A) in den ersten Datenspeichervorrichtungen (WH) definieren, umfasst; und
die erste Gruppe von Verweisen und die zweite Gruppe von Verweisen jeweils separat voneinander durch verschiedene Hosts (LIB, WH) gehostet werden.

5. Verfahren (300) zum Zugriff auf gemäß dem Verfahren nach Anspruch 3 oder 4 gesicherte Daten (D), wobei das Verfahren aufweist:
Erzeugen oder Empfangen (305) einer Zugriffsanfrage für einen Lesezugriff auf die gesicherten Daten (D, S);
Ermitteln (320, 325) der jeweiligen Speicherorte (WH) der den zu lesenden Daten (S) zugeordneten und in den ersten Datenspeichervorrichtungen (WH) gespeicherten Datenfragmente (DF) mittels der zumindest einen Verweisverwaltungsinstanz (LIB);
Bereitstellen (380, 385, 390), auf Basis ihrer ermittelten Speicherorte (WH, A), der Datenfragmente (DF) selbst, von jeweiligen Adressen (A) der Speicherorte für einen Lesezugriff auf die Datenfragmente (DF).

6. Verfahren nach Anspruch 5, wobei ein Lesezugriff auf die Datenfragmente (DF) mittels entsprechender temporärer Adressen (A) für deren jeweilige Speicherorte bereitgestellt wird oder erfolgt; und
nach einem erfolgten Lesezugriff auf die Datenfragmente (DF), die temporären Adressen (A) so abgeändert werden, dass dadurch ein nachfolgender Zugriff auf dieselben Datenfragmente (DF) unter wiederholter Nutzung derselben temporären Adressen (A) unmöglich wird.

7. Verfahren nach Anspruch 2 und einem der Ansprüche 5 oder 6, des Weiteren aufweisend:
Abspeichern oder Veranlassen einer Abspeicherung (340, 350) von Ereignisdaten (EZ) in den zumindest einen Distributed-Ledger (DL), welche eines oder mehrere der folgenden mit der Zugriffsanfrage verbundenen Schritte insgesamt oder individuell als Ereignis dokumentieren:
das Erzeugen oder Empfangen (305) der Zugriffsanfrage;
das Bereitstellen des Lesezugriffs, der Datenfragmente (DF) oder der rekonstruierten Daten (D) selbst;
einen Zugriffsversuch (335) oder einen tatsächlich erfolgten Zugriff (390) auf eines oder mehrere der Datenfragmente (DF).

8. Verfahren nach einem der vorausgehenden Ansprüche, des Weiteren aufweisend:
Durchführen eines Lesezugriffs (305 bis 390) auf die in den ersten Datenspeichervorrichtungen (WH) gespeicherten Datenfragmente (DF) und Rekonstruieren der zu sichernden Daten (D) mittels Zusammenfügens (395) und Entschlüsselns (400) der Gesamtheit der dabei gelesenen Datenfragmente (DF);
neues Verschlüsseln der rekonstruierten Daten mittels eines von dem ursprünglich zur Verschlüsselung der zu sichernden Daten unterschiedlichen kryptographischen Schlüssels;
Fragmentieren der aus dieser neuen Verschlüsselung resultierenden Daten in zumindest zwei neue Datenfragmente, die jeweils individuell eine echte Teilmenge und zusammen die Gesamtheit dieser neu verschlüsselten Daten darstellen;
Verteilen der neuen Datenfragmente über eine Mehrzahl von jeweils nicht-flüchtigen zweiten Datenspeichervorrichtungen hinweg zur jeweiligen dortigen Abspeicherung, wobei zumindest zwei der Datenfragmente in unabhängig voneinander gehostete Datenspeichervorrichtungen aus der Mehrzahl der zweiten Datenspeichervorrichtungen gespeichert werden.

9. Verfahren nach Anspruch 2 und Anspruch 8, des Weiteren aufweisend:
Abspeichern oder Veranlassen einer Abspeicherung von Ereignisdaten, welche, ohne die rekonstruierten Daten oder die Datenfragmente oder deren jeweilige Speicherorte selbst zu repräsentieren, den Lesezugriff, das erfolgte Fragmentieren der erneut verschlüsselten rekonstruierten Daten oder das Abspeichern der neuen Datenfragmente jeweils dauerhaft als aufgetretenes Ereignis dokumentieren, in dem zumindest einen Distributed-Ledger (DL).

10. Verfahren nach Anspruch 8 oder 9, des Weiteren aufweisend:
Bereitstellen des für die neue Verschlüsselung eingesetzten kryptographischen Schlüssels ausschließlich an einen oder mehrere als Schlüsselinhaber vorgesehene berechtigte Nutzer.

11. Verfahren nach einem der Ansprüche 5 bis 10, wobei der Lesezugriff in Reaktion auf eine Zugriffsanfrage (305) eines berechtigten Nutzers (U) durch eine von diesem separate Schlüsselverwaltungsinstanz (K) so erfolgt, dass die Schlüsselverwaltungsinstanz (K) die zum Entschlüsseln oder neu Verschlüsseln benötigten kryptographischen Schlüssel (PrivK) aufgrund einer durch die Zugriffsanfrage bedingten Autorisierung durch den berechtigen Nutzer zur Verfügung gestellt bekommt, ohne dass diese Schlüssel dem berechtigten Nutzer (U) selbst zugänglich gemacht werden.

12. Verfahren nach einem der vorausgehenden Ansprüche, des Weiteren aufweisend:
Abspeichern von Duplikaten der Datenfragmente in dritte, unabhängig voneinander und von den ersten Speichereinrichtungen gehostete, jeweils nicht-flüchtige Datenspeichervorrichtungen, so dass zumindest zwei der Duplikate zu verschiedenen Datenfragmenten über zwei nicht gemeinsam gehostete dritte Datenspeichervorrichtungen hinweg verteilt gespeichert werden.

13. Verfahren nach einem der vorausgehenden Ansprüche, wobei in dem Datenverarbeitungssystem die zu sichernden bzw. bereits gesicherten Daten (D, eD) im gesamten Verfahrensverlauf, soweit sie dabei insgesamt oder anteilig in unverschlüsselter Form überhaupt in dem Datenverarbeitungssystem außerhalb der fragmentierten und verteilten Speicherung in den Datenspeichervorrichtungen (WH) zwischengespeichert werden, ausschließlich in einem oder mehreren flüchtigen Datenspeichern temporär zwischengespeichert werden.

14. Verfahren nach einem der vorausgehenden Ansprüche, des Weiteren aufweisend:
Aktives Löschen (265) von etwaigen im Verfahrensverlauf in einem oder mehreren flüchtigen Zwischenspeichern in unverschlüsselter Form gespeicherten Repräsentationen der zu sichernden Daten (D, eD) oder des bzw. der zu ihrer Verschlüsselung bzw. Entschlüsselung eingesetzten kryptographischen Schlüssel (PrivK).

15. Datenverarbeitungssystem, das konfiguriert ist, das Verfahren (100; 200; 300) nach einem der Ansprüche 1 bis 14 auszuführen.

16. Datenverarbeitungssystem nach Anspruch 15, wobei das Datenverarbeitungssystem zur zumindest anteiligen Erfassung oder Erzeugung der zu sichernden Daten (D) ein oder mehrere Datenerhebungsgeräte (U) aufweist, die jeweils als medizintechnisches Gerät oder als ein Gerät zur Erfassung von Patientendaten ausgebildet sind.

17. Datenverarbeitungssystem nach Anspruch 16, wobei zumindest eines der Datenerhebungsgeräte (U) als medizintechnisches Gerät ausgebildet ist und zumindest eine der folgenden Funktionalitäten aufweist:
- Fluidmanagement;
- Reinigung von Körperflüssigkeiten;
- Blutreinigung;
- Dialyse.

18. Computerprogram, aufweisend Anweisungen, die bei ihrer Ausführung auf einem Datenverarbeitungssystem nach einem der Ansprüche 15 bis 17, dieses veranlassen, das Verfahren (100; 200; 300) nach einem der Ansprüche 1 bis 14 auszuführen.
